# EUROPÄISCHE PATENTSCHRIFT

(11) **EP 0 660 476 B1**
(45) Veröffentlichungstag und Bekanntmachung des Hinweises auf die Patenterteilung: **12.02.1997**
(21) Anmeldenummer: 94118608.2
(22) Anmeldetag: 25.11.1994
(51) Int. Cl.: H02G 3/08

(54) **Gehäuseanordnung mit modularem Aufbau**
Housing arrangement with modular construction
Agencement de boîtiers à construction modulaire

(30) Priorität: 23.12.1993 DE 4344318
(43) Veröffentlichungstag der Anmeldung: 28.06.1995
(73) Patentinhaber: RICHARD HIRSCHMANN GmbH & Co., 72606 Nürtingen (DE)
(72) Erfinder: Lieb, Gerald, D-71394 Kernen (DE); Aichem, Peter, D-71032 Böblingen (DE); Sahm, Jürgen, D-73760 Ostfildern (DE)
(74) Vertreter: Stadler, Heinz, Dipl.-Ing.

(56) Entgegenhaltungen:
- DE-C- 741 309
- DE-C- 807 209
- DE-U- 1 879 636

## Beschreibung

Die Erfindung betrifft eine Gehäuseanordnung mit modularem Aufbau, bestehend aus mindestens zwei Einzelgehäusen deren einander zugewandte Wände mit jeweils mindestens einem Durchführungsloch versehen sind.

Elektrische Anschlußblöcke sind modular aufgebaute mechanische Einheiten, die aneinandergereiht mechanisch gekoppelt werden, um die Einzelgehäuse elektrisch zu verbinden. An eine solche Gehäuseanordnung werden die verschiedensten Anforderungen gestellt. Sie müssen z. B. ein geringes Gewicht besitzen, leicht erweiterbar und ergänzbar sein und die einzelnen Gehäusekomponenten sollten schnell und unproblematisch auswechselbar sein. Derartige Gehäuseanordnungen werden im Zusammenhang mit elektrischen Busverbindungen eingesetzt.

Aus der DE-C-807 209 oder DE-U-1 879 836 ist eine Gehäuseanordnung bekannt, deren einzelne Gehäusemodule spaltfrei miteinander verbunden werden können.

Der Erfindung liegt die Aufgabe zugrunde eine Gehäuseanordnung zu schaffen, deren Einzelgehäuse einfach und kostengünstig miteinander verbunden, ausgebaut oder ausgewechselt werden können.

Ausgehend von der eingangs genannten Gehäuseanordnung wird die gestellte Aufgabe erfindungsgemäß durch die Merkmale des Anspruchs 1 gelöst.

Ein Vorteil der Erfindung besteht darin, daß die einzelnen Gehäusemodule spaltfrei miteinander verbunden werden können, was eine Platzersparnis bedeutet.

Ein weiterer Vorteil der Erfindung besteht darin, daß der Anbau eines neuen Gehäuses, ebenso wie der Ausbau eines alten Gehäuses, jeweils nur einen Schraubvorgang erfordert.

Ein weiterer Vorteil der Erfindung ist, daß es für das Auswechseln eines Gehäuses nicht erforderlich ist, andere Gehäuseverbindungen zusätzlich zu öffnen oder Einzelgehäuse zu entfernen. Dies bedeutet eine Zeitersparnis bei der Montage bzw. Demontage.

Ein weiterer Vorteil der Erfindung äußert sich darin, daß die einzelnen Gehäuse inklusive der Stellen, die für die Gehäuseverbindung relevant sind, abgedichtet werden können, was z. B. die Gehäuseanordnung, die elektrische Leitungen beinhaltet, gegen Witterungseinflüsse schützt.

Besonders vorteilhaft ist eine Ausführungsform der Erfindung, bei der je zwei Einzelgehäuse, bzw. der einander zugewandte Wände durch mechanische Verbindungsmittel miteinander verbunden sind.

Im Hinblick auf die Erfindung ist es ebenfalls besonders vorteilhaft, wenn die einander zugewandten Durchführungslöcher deckungsgleich angeordnet sind. Dies ermöglicht eine Verbindung über den ganzen Querschnitt des Durchführungslochs.

Wird eine Gehäuseanordnung mit einer Vielzahl von Einzelgehäusen benötigt, so ist es besonders vorteilhaft die Gehäuse aneinandergereiht miteinander zu verbinden. Dies kann entweder ohne spezielle Halterungseinrichtungen, aber auch beispielsweise auf einer Hutschiene erfolgen. Eine solche Einrichtung wird im Zusammenhang mit einer elektrischen Busverbindung eingesetzt.

In einem vorteilhaften Ausführungsbeispiel der Erfindung bestehen die mechanischen Verbindungsmittel aus einer innen ausgehöhlten Schraube, durch die Kabel geführt werden, und einer Mutter.

Bevorzugter Weise weist die Mutter ein Panzerrohrgewinde auf. Dieses sollte nach Möglichkeit genormt sein.

In diesem Zusammenhang ist es besonders vorteilhaft, wenn die genormten Panzerrohrgewinde eine solche Tiefe aufweisen, daß eine Verschraubung mit genormten Druckschrauben möglich ist. Dies ermöglicht eine flexible Montage der Gehäuseanordnung.

Hinsichtlich der Montage ist es ebenfalls vorteilhaft, die Abmessungen der Mutter bzw. die Position des Durchführungslochs so zu wählen, daß die Mutter mit dem Durchführungsloch nach dem Einsetzen zur Deckung kommt. Zum Beispiel hinsichtlich der Montage eines Gehäuses, muß die Mutter in ihrer Lage über dem Gehäuseboden nicht zusätzlich fixiert werden.

Zur Fixierung der Lage der Mutter, d. h. um seitliches Wegrutschen zu verhindern und um ein Festhalten der Mutter während des Schraubvorgangs mit z. B. einem Schraubenschlüssel einzusparen, ist es vorteilhaft, Arretierungen an der Gehäusewand bzw. dem Gehäuseboden vorzusehen. Derartige Arretierungen können natürlich auch als Führungsschiene für die Schraube vorgesehen sein. Beziehungsweise die Schraube festzuhalten, während die Mutter mit einem Schraubenschlüssel festgezogen wird.

Weist die Schraube einen Kronenkopf auf, so läßt sich die Anordnung besonders leicht und vorteilhaft montieren, wenn man einen Schraubendreher benutzt, der in die Verzahnung des Schraubenkopfes eingreift.

Um die Gehäuseanordnung, d. h. insbesondere die Verbindung zweier Einzelgehäuse abzudichten, besteht eine besonders vorteilhafte Ausführungsform der Erfindung darin, daß die Schraube eine Nut aufweist, in der sich mindestens ein Dichtungsring befindet. So können, z. B. bei einer Montage im Freien die elektrischen Verbindungen vor Witterungseinflüssen geschützt werden.

Eine besonders preisgünstige und einfach zu realisierende Ausführungsform einer solchen Dichtung stellen ein oder mehrere O-Ringe dar.

Um eine effektive Dichtung zu ermöglichen, muß das Volumen des O-Rings größer sein, als das verbleibende Volumen des Raumes, der durch die Innenwand des Durchführungslochs und die Außenwand der Nut in den Schrauben vorgegeben ist. Dies läßt sich auf mehrere Arten realisieren.

Eine diesbezüglich vorteilhafte Ausführungsform der Erfindung ist dadurch gekennzeichnet, daß der Außenradius des Dichtungsrings größer als der Innenradius des Durchführungsloches ist.

Alternativ oder zusätzlich dazu kann ebenfalls die Breite des Dichtungsrings größer als die der beiden Durchführungslöcher zusammen sein.

In diesem Zusammenhang ist es besonders vorteilhaft, in dem Fall bei dem mindestens zwei Dichtungsringe für die Abdichtung der Gehäuseverbindung verwendet werden, diese durch einen Steg in der Nut zu trennen. Dies reduziert den Volumenbedarf für die O-Ringe und fixiert sie in ihrer Position, wodurch die einzelnen Gehäuse definiert abgedichtet werden.

Für die Zuführung und Abführung von Kabelverbindungen ist es besonders vorteilhaft, weitere Kabeldurchführungslöcher in den Gehäusen vorzusehen.

In jedem Gehäuse befindet sich in einer vorteilhaften Ausführungsform der Erfindung ein Anschlußklemmblock, an dem die elektrischen Verbindungen befestigt sind. Dieser kann zum Zweck der Abschirmung gegen Störimpulse mit einem elektromagnetischem Schirm versehen sein.

Falls einige Durchführungslöcher nicht zur elektrischen Verbindung verwendet werden, d. h. keine Kabel durch sie hindurchführen, ist es aus Sicherheitsüberlegungen, bzw. aus Gründen der Abdichtung vorteilhaft, Verschlußkappen in die Durchführungslöcher einzuschrauben, um sie zu schließen.

Zur Abdichtung des gesamten Gehäuses ist es vorteilhaft, bei allen Durchführungslöchern eine Dichtung vorzusehen. Dies gilt nicht nur für mit Verschlußkappen geschlossene Durchführungslöcher sondern z. B. auch für Öffnungen zur Kabelzu- bzw. -abfuhr.

Die Erfindung sowie weitere Ausgestaltungen und Vorteile wird bzw. werden nachfolgend anhand von Ausführungsbeispielen unter Bezugnahme auf die Figuren erläutert. Dabei bezeichnen die Maßangaben in den Zeichnungen keine feste Vorgabe, sondern sind lediglich zur Veranschaulichung eines bestimmten Ausführungsbeispiel vorhanden. Es zeigen:
- Fig. 1: eine erfindungsgemäße Ausführungsform bei der zwei Einzelgehäuse abgedichtet miteinander verbunden sind;
- Fig. 2a: eine besonders vorteilhafte Ausführungsform der mechanischen Verbindung, nämlich eine Schraube mit Kronenkopf, Panzerrohrgewinde, und einer Nut zur Aufnahme eines Dichtungsrings;
- Fig. 2b: eine Draufsicht auf den Kronenkopf der in Fig. 2a dargestellten Schraube;
- Fig. 3a: eine Ausführungsform der Schraube analog zu Fig. 2a, wobei zusätzlich ein Steg in der Nut der Schraube vorgesehen ist;
- Fig. 3b: eine vergrößerte Darstellung der Nut, der in Fig. 3a dargestellten Schraube.

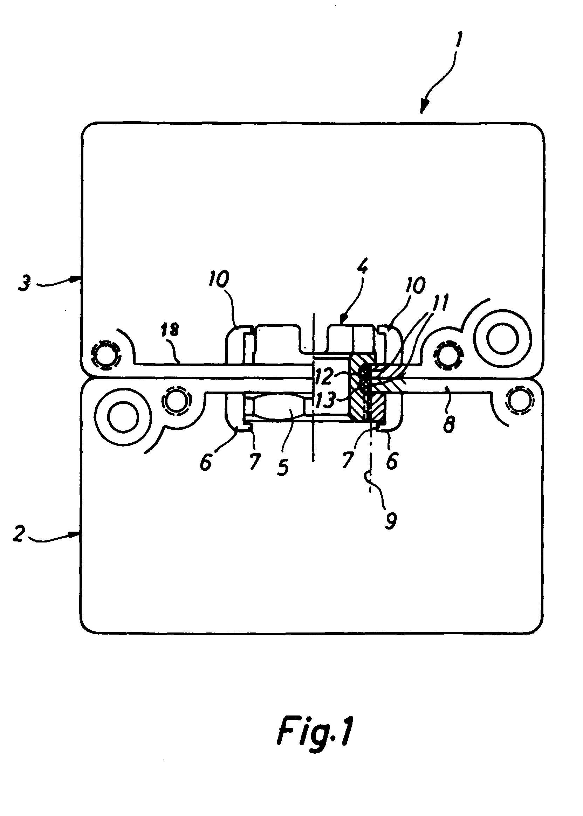

Fig. 1 zeigt eine Gehäuseanordnung 1, bestehend aus zwei Einzelgehäusen 2 und 3, die mechanisch durch eine Kronenkopfschraube 4 und eine Mutter 5 verbunden sind. Zur Arretierung der Mutter sind zwei Arretierlaschen 6 vorgesehen, die die Mutter 5 vor und während des Einschraubvorgangs halten.

Ausbuchtungen 7 verhindern das Entfernen der Mutter 5 von der Gehäusewand 8. Die Arretierlaschen 6 verhindern ebenfalls ein seitliches Wegrutschen bzw. Verkippen der Mutter von dem Durchführungsloch 9. Die Größe der Mutter 5 und die Position des Durchführungslochs 9 werden so gewählt, daß nach Einsetzen der Mutter 5 in die durch die Arretierungen 6 bzw. 7 gebildete Führungsschiene der Innendurchmesser der Mutter 5 mit dem Durchführungsloch 9 zur Deckung kommt. Die in der Zeichnung dargestellten Arretierungen 10 im Gehäuse 3 stellen eine Führungsschiene für die Schraube 4 zum Ansatz des Schraubvorganges dar.

In einer Nut 11 der Schraube 4 befinden sich zwei 0-Ringe 12, 13 zur Abdichtung der einzelnen Gehäuse 2, 3 an der Stelle der Gehäuseverbindung. Man beachte, daß durch den Einschraubvorgang die beiden O-Ringe 12, 13 zusammengepreßt werden. Ihr Volumen ist größer, als das des nach dem Einschraubvorgang vorhandenen Volumens zwischen der Nut 11 einerseits und dem Innenradius des Durchführungslochs 9.

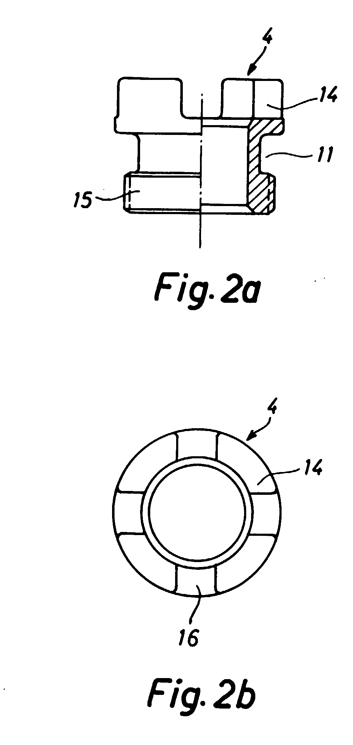

Fig. 2 ist eine Zeichnung der Schraube 4 mit einer Nut 11 zur Aufnahme eines oder mehrerer Dichtungsringe 12, 13.

Die Schraube 4 besitzt einen Kronenkopf 14 und ein Panzerrohrgewinde 15.

Fig. 2b zeigt eine Draufsicht auf den Kronenkopf 14 der in Fig. 2a dargestellten Schraube 4 und speziell die Zakken 16 des Kronenkopfes 14, in die man mit dem Schraubendreher eingreifen muß, um die Schraube zu drehen.

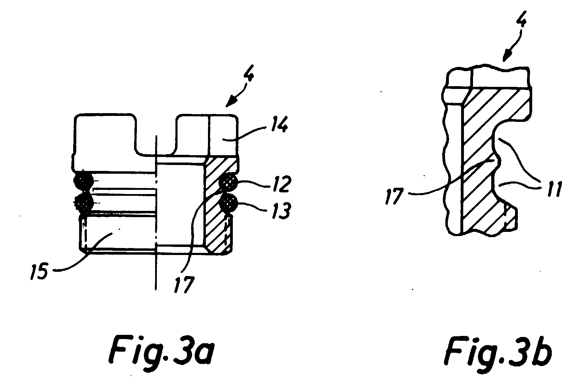

Fig. 3a zeigt eine alternative Ausführungsform der Erfindung, bei der in der Nut 11 der Schraube 4 ein Steg 17 zur Trennung der zweie O-Ringe 12, 13 vorgesehen ist, die jeweils ein Einzelgehäuse 2, 3 abdichten. Durch den Steg 17, der bei diesem Ausführungsbeispiel nur als kleine Erhebung ausgebildet ist, werden die Dichtungsringe 12, 13 in ihrer jeweiligen Position fixiert, um so effektiv die Einzelgehäuse 2, 3 abzudichten.

Fig. 3b zeigt eine Vergrößerung des durch eine strickpunktierten Kreis markierten Bereichs der Fig. 3a. Die Nut 11 weist einen Steg 17 auf, der die Nut 11 in zwei Bereiche einteilt, die für die Aufnahme der zwei O-Ringe 12, 13 vorgesehen sind.

## Patentansprüche

1. Gehäuseanordnung mit modularem Aufbau, bestehend aus wenigstens zwei Einzelgehäusen (2, 3), deren einander zugewandte Wände (8, 18) mit jeweils mindestens einem Durchführungsloch (9) versehen sind, wobei die einander zugewandten Wände (8, 18) spaltfrei aneinanderliegend miteinander verbunden sind, dadurch gekennzeichnet, daß eine Schraube (4) und eine Mutter (5) zur Verbindung der Gehäuse (2, 3) vorgesehen sind, und daß zur Halterung der Mutter (5) mindestens eine Arretierung (6) vorgesehen ist.

2. Gehäuseanordnung (1) nach Anspruch 1, dadurch gekennzeichnet, daß die angrenzenden Durchführungslöcher (9) deckungsgleich ausgeführt sind.

3. Gehäuseanordnung (1) nach einem der vorhergehenden Ansprüche, dadurch gekennzeichnet, daß die Gehäuse (2, 3) aneinandergereiht miteinander verbunden sind.

4. Gehäuseanordnung (1) nach einem der vorhergehenden Ansprüche, dadurch gekennzeichnet, daß die Schraube (4) wenigstens einen Kanal aufweist.

5. Gehäuseanordnung (1) nach einem der vorhergehenden Ansprüche, dadurch gekennzeichnet, daß die Mutter (5) ein Panzerrohrgewinde (15) aufweist.

6. Gehäuseanordnung (1) nach einem der vorhergehenden Ansprüche, dadurch gekennzeichnet, daß das Panzerrohrgewinde (15) eine solche Tiefe aufweist, daß eine Verschraubung mit genormten Druckschrauben möglich ist.

7. Gehäuseanordnung (1) nach einem der vorhergehenden Ansprüche, dadurch gekennzeichnet, daß der Innendurchmesser der Mutter (5) mit dem Durchführungsloch (9) zur Deckung kommt.

8. Gehäuseanordnung (1) nach einem der vorhergehenden Ansprüche, dadurch gekennzeichnet, daß die Schraube (4) einen Kronenkopf (14) aufweist.

9. Gehäuseanordnung (1) nach einem der vorhergehenden Ansprüche, dadurch gekennzeichnet, daß die Schraube (4) eine Nut (11) aufweist, in der sich wenigstens ein Dichtungsring befindet.

10. Gehäuseanordnung (1) nach Anspruch 9, dadurch gekennzeichnet, daß der Dichtungsring als O-Ring (12, 13) ausgebildet ist.

11. Gehäuseanordnung (1) nach einem der Ansprüche 9 oder 10, dadurch gekennzeichnet, daß der Außenradius des wenigstens einen Dichtungsrings (12, 13) größer als der Innenradius des Durchführungsloches (9) ist.

12. Gehäuseanordnung (1) nach einem der vorhergehenden Ansprüche 9 bis 11, dadurch gekennzeichnet, daß die Dicke des wenigstens einen Dichtungsrings (12, 13) größer als die der beiden Durchführungslöcher (9) zusammen ist.

13. Gehäuseanordnung (1) nach einem der Ansprüche 9 bis 12, dadurch gekennzeichnet, daß ein Steg zwischen je zwei Dichtungsringen (12, 13) vorgesehen ist.

14. Gehäuseanordnung (1) nach einem der vorhergehenden Ansprüche, dadurch gekennzeichnet, daß wenigstens ein weiteres Durchführungsloch (9) in wenigstens einem Gehäuse (2, 3) vorgesehen ist.

15. Gehäuseanordnung (1) nach einem der vorhergehenden Ansprüche, dadurch gekennzeichnet, daß die Gehäuse (2, 3) rechteckförmig sind.

16. Gehäuseanordnung (1) nach einem der vorhergehenden Ansprüche, dadurch gekennzeichnet, daß sich im Gehäuse (2, 3) ein Anschlußklemmblock befindet.

17. Gehäuseanordnung (1) nach einem der vorhergehenden Ansprüche, dadurch gekennzeichnet, daß die Gehäuse abnehmbare Oberteile besitzen.

18. Gehäuseanordnung (1) nach einem der vorhergehenden Ansprüche, dadurch gekennzeichnet, daß in die nicht verwendeten Durchführungslöcher (9) Verschlußkappen eingeschraubt sind.

19. Gehäuseanordnung (1) nach einem der vorhergehenden Ansprüche, dadurch gekennzeichnet, daß durch die Durchführungslöcher (9) eine interne Verdrahtung zwischen benachbarten Gehäusen (2, 3) besteht.

20. Gehäuseanordnung (1) nach einem der vorhergehenden Ansprüche, dadurch gekennzeichnet, daß die weiteren Durchführungslöcher (9) abgedichtete Kabelzu- und -abführungsöffnungen aufweisen.

## Claims

1. Housing arrangement with modular construction, consisting of at least two individual housings (2, 3), whose mutually facing walls (8, 18) are provided with in each case at least one lead-through hole (9), the mutually facing walls (8, 18) being connected to one another in a manner such that they lie against one another without any gaps, characterized in that a screw (4) and a nut (5) are provided for connecting the housings (2, 3) and in that at least one locking element (6) is provided for retaining the nut (5).

2. Housing arrangement (1) according to Claim 1, characterized in that the adjacent lead-through holes (9) are of congruent design.

3. Housing arrangement (1) according to one of the preceding claims, characterized in that the housings (2, 3) are connected to one another in a manner such that they are lined up against one another.

4. Housing arrangement (1) according to one of the preceding claims, characterized in that the screw (4) has at least one channel.

5. Housing arrangement (1) according to one of the preceding claims, characterized in that the nut (5) has a heavy-gauge conduit thread (15).

6. Housing arrangement (1) according to one of the preceding claims, characterized in that the heavy-gauge conduit thread (15) has a depth such that a screw joint using standardized pressing screws is possible.

7. Housing arrangement (1) according to one of the preceding claims, characterized in that the internal diameter of the nut (5) is congruent with the lead-through hole (9).

8. Housing arrangement (1) according to one of the preceding claims, characterized in that the screw (4) has a castellated head (14).

9. Housing arrangement (1) according to one of the preceding claims, characterized in that the screw (4) has a nut (11) in which there is at least one sealing ring.

10. Housing arrangement (1) according to Claim 9, characterized in that the sealing ring is designed as an O-ring (12, 13).

11. Housing arrangement (1), according to either of Claims 9 and 10, characterized in that the external radius of the at least one sealing ring (12, 13) is greater than the internal radius of the lead-through hole (9).

12. Housing arrangement (1), according to one of the preceding Claims 9 to 11, characterized in that the thickness of the at least one sealing ring (12, 13) is greater than that of the two lead-through holes (9) together.

13. Housing arrangement (1) according to one of Claims 9 to 12, characterized in that a web is provided between each two sealing rings (12, 13).

14. Housing arrangement (1) according to one of the preceding claims, characterized in that at least one further lead-through hole (9) is provided in at least one housing (2, 3).

15. Housing arrangement (1) according to one of the preceding claims, characterized in that the housings (2, 3) are rectangular.

16. Housing arrangement (1) according to one of the preceding claims, characterized in that a terminal block is situated in the housing (2, 3).

17. Housing arrangement (1) according to one of the preceding claims, characterized in that the housings have removable top parts.

18. Housing arrangement (1) according to one of the preceding claims, characterized in that closure caps are screwed into the unused lead-through holes (9).

19. Housing arrangement (1) according to one of the preceding claims, characterized in that the lead-through holes (9) bring about internal wiring between adjacent housings (2, 3).

20. Housing arrangement (1) according to one of the preceding claims, characterized in that the further lead-through holes (9) have sealed cable supply and lead-off openings.

## Revendications

1. Agencement de boîtiers à construction modulaire, composé d'au moins deux boîtiers individuels (2, 3) dont les parois qui se font face (8, 18) sont à chaque fois munies d'au moins un trou de passage (9), les parois se faisant face (8, 18) étant reliées l'une à l'autre sans espace, caractérisé par le fait qu'une vis (4) et un écrou (5) sont prévus pour relier les boîtiers (2, 3) et qu'au moins un dispositif d'arrêt (6) est prévu pour maintenir l'écrou (5).

2. Agencement de boîtiers (1) selon la revendication 1, caractérisé par le fait que les trous de passage (9) voisins sont réalisés de façon à coïncider.

3. Agencement de boîtiers (1) selon l'une des revendications précédentes, caractérisé par le fait que les boîtiers (2, 3) sont reliés entre eux en étant alignés.

4. Agencement de boîtiers (1) selon l'une des revendications précédentes, caractérisé par le fait que la vis (4) présente au moins un canal.

5. Agencement de boîtiers (1) selon l'une des revendications précédentes, caractérisé par le fait que l'écrou (5) présente un filetage en tube blindé (15).

6. Agencement de boîtiers (1) selon l'une des revendications précédentes, caractérisé par le fait que le filetage en tube blindé (15) présente une profondeur telle qu'il est possible de réaliser un assemblage vissé avec des vis de pression normalisées.

7. Agencement de boîtiers (1) selon l'une des revendications précédentes, caractérisé par le fait que le diamètre intérieur de l'écrou (5) vient recouvrir le trou de passage (9).

8. Agencement de boîtiers (1) selon l'une des revendications précédentes, caractérisé par le fait que la vis (4) présente une tête en couronne (14).

9. Agencement de boîtiers (1) selon l'une des revendications précédentes, caractérisé par le fait que lavis (4) présente une rainure (11) dans laquelle se trouve au moins une bague d'étanchéité.

10. Agencement de boîtiers (1) selon la revendication 9, caractérisé par le fait que la bague d'étanchéité est réalisée sous la forme d'un joint torique (12, 13).

11. Agencement de boîtiers (1) selon des revendications 9 ou 10, caractérisé par le fait que le rayon extérieur de l'au moins une bague d'étanchéité (12, 13) est supérieur au rayon intérieur du trou de passage (9).

12. Agencement de boîtiers (1) selon l'une des revendications précédentes 9 à 11, caractérisé par le fait que l'épaisseur de l'au moins une bague d'étanchéité (12, 13) est supérieure à celle des deux trous de passage (9) ensemble.

13. Agencement de boîtiers (1) selon l'une des revendications 9 à 12, caractérisé par le fait qu'une tige est à chaque fois prévue entre deux bagues d'étanchéité (12, 13).

14. Agencement de boîtiers (1) selon l'une des revendications précédentes, caractérisé par le fait qu'au moins un trou de passage (9) supplémentaire est prévu dans au moins un boîtier (2, 3).

15. Agencement de boîtiers (1) selon l'une des revendications précédentes, caractérisé par le fait que les boîtiers (2, 3) sont de forme parallélépipédique.

16. Agencement de boîtiers (1) selon l'une des revendications précédentes, caractérisé par le fait qu'un bloc de bornes de raccordement se trouve dans le boîtier (2, 3).

17. Agencement de boîtiers (1) selon l'une des revendications précédentes, caractérisé par le fait que les boîtiers sont munis d'une partie supérieure amovible.

18. Agencement de boîtiers (1) selon l'une des revendications précédentes, caractérisé par le fait que des capuchons de fermeture sont vissés dans les trous de passage (9) non utilisés.

19. Agencement de boîtiers (1) selon l'une des revendications précédentes, caractérisé par le fait qu'il existe un câblage interne entre les boîtiers voisins (2, 3) au travers des trous de passage (9).

20. Agencement de boîtiers (1) selon l'une des revendications précédentes, caractérisé par le fait que les trous de passage (9) supplémentaires présentent des orifices d'arrivée et de départ de câbles hermétiquement fermés.
